(19) Europäisches Patentamt
European Patent Office
Office européen des brevets

(11) **EP 2 908 475 B1**

(12) **EUROPEAN PATENT SPECIFICATION**

(45) Date of publication and mention
of the grant of the patent:
**04.09.2019 Bulletin 2019/36**

(51) Int Cl.:
***H04L 12/413*** *(2006.01)*

(21) Application number: **15155308.8**

(22) Date of filing: **17.02.2015**

(54) **Limitation of bit stuffing in a communication frame of an electronic signal**

Begrenzung der Bitstopfung in einem Kommunikationsrahmen eines elektronischen Signals

Limitation de bourrage de bits dans une trame de communication d'un signal électronique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2014 IT TO20140132**

(43) Date of publication of application:
**19.08.2015 Bulletin 2015/34**

(73) Proprietor: **Consiglio Nazionale Delle Ricerche 00185 Roma (IT)**

(72) Inventors:
  • **Cena, Gianluca**
    **I-10152 Torino (IT)**
  • **Valenzano, Adriano**
    **I-10126 Torino (IT)**
  • **Hu, Tingting**
    **I-10127 Torino (IT)**
  • **Cibrario Bertolotti, Ivan**
    **I-10065 San Germano Chisone (Torino) (IT)**

(74) Representative: **Deambrogi, Edgardo et al Corso Emilia 8**
    **10152 Torino (IT)**

(56) References cited:
**DE-A1-102011 080 476**

• **NOLTE T ET AL: "Minimizing CAN response-time jitter by message manipulation", REAL-TIME AND EMBEDDED TECHNOLOGY AND APPLICATIONS SYMPOSIUM, 2002. PR OCEEDINGS. EIGHTH IEEE 24-27 SEPT. 2002, PISCATAWAY, NJ, USA, IEEE, 24 September 2002 (2002-09-24), pages 197-206, XP010621748, ISBN: 978-0-7695-1739-1**
• **CENA GIANLUCA ET AL: "Fixed-Length Payload Encoding for Low-Jitter Controller Area Network Communication", IEEE TRANSACTIONS ON INDUSTRIAL INFORMATICS, IEEE SERVICE CENTER, NEW YORK, NY, US, vol. 9, no. 4, 1 November 2013 (2013-11-01), pages 2155-2164, XP011530590, ISSN: 1551-3203, DOI: 10.1109/TII.2013.2240310 [retrieved on 2013-10-14]**
• **"Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, vol. msc.upamd, 18 November 2010 (2010-11-18), pages 1-52, XP017637056,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to electronic communications in general and in particular electronic communications in CAN (Controller Area Network). More specifically, it relates to a method for composing an electronic signal, an electronic system arranged for implementing the aforesaid method and an electronic signal comprising at least one communication frame.

Composing an electronic signal comprising a stream of bits arranged in a communication frame including a data field and an error control field calculated as a predetermined function of the current value of the data field, in which in part of the communication frame comprising at least the data field and the error control field a consecutive sequence of bits of identical value equal in number to a predetermined threshold limit is followed by at least one sequence break bit having an opposite value (known as a "stuff bit") is known in the art.

For example the transmission protocol known by the acronym CAN (Controller Area Network), which is quite widely used in the automotive industry, defines a communication frame including:

- a header field (H);
- a data field (D) which is available to the user in order to carry the useful load ("payload", P);
- an error control field (R), specifically a control field for the detection of errors, CRC, calculated using a mathematical function applied to the preceding fields; and
- a trailer field (U).

A disadvantage may arise in the case where a prolonged sequence of unchanged bits, that is bits of identical value, is transmitted between a transmitting device and a receiving device which have to be synchronised. Synchronisation in the receiver is in fact acquired from edges in the transmitted bits, and the persistent absence of an edge in the bit stream may give rise to loss of synchronisation.

For this reason sequence break bits having a value opposite to the value of the bits included in the extended sequence of identical bits are artificially inserted into the communication frame to force the presence of a switching edge which can be detected by the receiver, on which synchronisation can be maintained. These bits are known as stuff bits, and their spurious introduction, or bit stuffing, is often uncontrolled because it depends on the original bit sequence, which in turn depends upon the information which has to be transmitted.

In the specific case of the transmission of an electronic signal according to the CAN protocol, whenever a sequence of bits including 5 adjacent bits having the same level (indicated below as a primer sequence) is transmitted on a communication bus the CAN controller of the transmitting device automatically inserts a bit of opposite value thus creating a switching edge in the bit stream which enables the receivers to synchronise their own timings accurately. This ensures that the signal conveyed on the network is properly decoded, independently of the data included in the signal frame.

Disadvantageously it is not possible to know from the outset what the length (and therefore the transmission time) of a communication frame of a signal which includes a plurality of stuff bits will be, because the number of stuff bits introduced at a transmitting device before the signal is dispatched via the transmission channel largely depends on the binary coding of the data transmitted and, although to a lesser extent, on the binary coding of the header and error control fields in the communication frame. Thus the communication frame affected by a variable and uncontrolled number of stuff bits may be of variable duration around a predetermined expected duration, and this phenomenon is referred to as communication jitter.

Also, as bit stuffing is carried out after the error control field has been calculated, it has an adverse influence on the error detection ability of a frame check code, such as for example the CRC code (cyclic redundancy check), and this consequently has an adverse effect on the reliability of the communication.

Various techniques for reducing, containing or eliminating stuff bits are known in the art.

In the article "Using bit-stuffing distributions in CAN analysis" which appeared in Proc. IEEE/IEE Real-Time Embedded Systems Workshop, 2001, T. Nolte, H. Hansson, C. Norström, and S. Punnekkat identified the problem of jitter induced in a CAN transmission by the bit stuffing mechanism and proposed a solution consisting of the application of a scrambling technique to the payload, suggesting in particular that the payload bit string be combined in XOR with a string of alternating bits. This is a fairly simple approach which makes it possible to achieve only a statistical reduction in the number of stuff bits added to the data field.

In the article "Minimising CAN response-time jitter by message manipulation" which appeared in Proc. VIII IEEE Real-time and Embedded Technology and Application Symposium, 2002, some of the authors of the previous article, T. Nolte, H. Hansson and C. Norström, proposed that selection and scrambling techniques be applied to eliminate bit stuffing from the message header and reduce it statistically in the data field without however affecting any bit stuffing in the CRC error control field, which in the standard CAN frame is located downstream from the data field (payload). Specifically the authors proposed a technique of selecting bits in the header of a message frame in order to prevent bit stuffing in the header portion of the frame, and a technique for coding the payload in the message frame to achieve a statistical reduction in the occurrence of bit stuffing in the payload portion of the frame. In the standard format of a CAN frame the header field comprises an identifier field and a control field (shown in Figure 3), in which the control field includes an IDE bit, an r0 bit and a DLC field which consists of a string of 4 bits describing the number of bytes in the data field.

International Patent Application WO2013/020781 in the name of Robert Bosch GmbH, corresponding to the proposed technical specification presented by the same applicant, "CAN with Flexible Data-Rate specification", version 1.0 (April 2012), relates to a different CAN communication protocol, specifically a CAN protocol with a flexible data transmission rate (CAN-FD). The object of this improved specifics in the original CAN protocol is also that of reducing the adverse influence of the bit stuffing mechanism on the error detection ability of the control code in comparison with the conventional CAN transmission protocol, and this is achieved by modifying the format of the message, in particular by modifying the format of its error control field (CRC), which is no longer structured as a monolithic error control field, but is obtained from a series of partial fields having a typical length of 4 bits, alternating with predetermined stuff bits.

Disadvantageously this solution is not compatible with the conventional CAN protocol, and therefore both the CAN controllers of existing transmission devices and the tools for the design of these controllers are unsuitable and cannot be used to generate signal frames according to the CAN-FD protocol.

Conversely it would be desirable to be able to develop more effective control of the stuff bits without adversely affecting the fundamental aspects of the original protocol, so that compatibility with the known CAN environment can be achieved. This is particularly useful in the automotive industry where it is advantageous to be able to maintain the development logic of the original CAN transmission protocol without having to replace the internal programming logic of CAN controllers of transmission devices interfacing with the CAN networks with which vehicles are equipped.

The inventors have previously developed a scheme for coding the data field of a communication frame in order to prevent the generation of stuff bits there in a communication signal according to the CAN protocol. This technique, identified generically by the acronym ZSD (Zero-Stuff bit Data), or by the abbreviation 8B9B in the case of a specific algorithm to which practical reference will be made below, has been described in the article by G. Cena, I. Cibrario Bertolotti, T. Hu and A. Valenzano, "Fixed-length payload encoding for low-jitter Controller Area Network communication" published in IEEE Trans. Ind. Informat., volume 9, number 4, November 2013.

The 8B9B coding scheme presented by the authors (illustrated in Table I on page 2157) employs an enlarged coding for each byte of the payload, in particular a 9-bit coding, and makes it possible to guarantee that stuff bits will not be added in the data field of a CAN communication frame during the transmission from a CAN controller to the communication bus. A single break bit (BB) is provided at the start of the data field, and a padding field of variable length (PAD) is provided at the end of the data field, the values of which are set in such a way as to prevent the formation of primer sequences at the boundary between the data field and the adjacent fields in the communication frame.

This coding technique makes it possible to obtain a coded data field which does not include primer sequences and also prevents the primer sequences from appearing at the boundary between the header field and the coded data field and reduces their occurrence between the coded data field and the error control field. Nevertheless, as the same authors clarify on page 2158, column 1, lines 7 et sequenter, the 8B9B coding technique does not constitute a remedy for eliminating jitter due to bit stuffing in the error control field (CRC).

The 8B9B method belongs more specifically to the class of coding schemes known as $ZSD_2$, in which the sequence of bits corresponding to the coded payload, in addition to satisfying the above properties, also has the characteristic that it has no more than two tail bits of the same value.

A comparison between the efficiency of the "XOR" coding scheme of Nolte et al. and the efficiency of the 8B9B coding scheme of Cena et al., with particular regard to reducing transmission jitter, was carried out by G. Cena, I. Cibrario Bertolotti, T. Hu, A. Valenzano, in the article "Performance comparison of mechanisms to reduce bit stuffing jitters in Controller Area Networks" which appeared in Proc. 17th IEEE Conference on Emerging Technologies and Factory Automation (ETFA), 2012, pages 1-8. This article highlights the fact that none of the coding techniques now proposed in the literature are capable of completely removing the stuff bits in a communication frame.

In fact, in any case, in communication frames providing for an error control field, for example a field for detecting or correcting errors (CRC or cyclic redundancy check), reduction or elimination of the stuff bits in the coded payload of the data field is insufficient to achieve deterministic control of the number of stuff bits in the entire communication frame, because a variable number of stuff bits up to a maximum of four in the case of the CAN protocol could be introduced into the error control field when calculating the latter, depending upon the string of bits in the data field and in the preceding header field.

This always brings about variability in the length of the communication frame, that is of the required transmission time for a frame, and in the last analysis has an adverse effect on timing accuracy in distributed control systems which make use of such a communication protocol.

The aim of this invention is to provide a method for composing an electronic signal comprising a bit stream arranged in a communication frame including a data field and an error control field calculated as a function of at least the said data field, which is capable of preventing the generation of stuff bits in the error control field of the transmission frame.

A further object of this invention is to provide a method for composing an electronic signal comprising a bit stream arranged in a communication frame including a data field and an error control field calculated as a function of at least the said data field in such a way as to render the estimation of the transmission times for a message between a transmitting device and one or more receiving devices in a communication network operating with the CAN protocol purely deterministic.

According to this invention these objects are accomplished by a method for composing an electronic signal having the characteristics claimed in claim 1.

Particular embodiments are the subject matter of the dependent claims, whose content is to be understood to constitute an integral part of this description.

A further subject of the invention is a processing system for composing an electronic signal, a configured electronic circuit or a processing program which can be carried out by a programmable processing module, and an electronic signal as claimed.

To sum up, the principle of the invention lies in the use of some bits in the data field, named tuning bits, which are set to a value such that they do not introduce stuff bits and at the same time drive calculation of the control code towards a value which does not itself require the transmission of stuff bits.

Advantageously, if placed alongside known techniques for limiting bit stuffing in the data field of a communication frame, for example existing techniques which are suitable for coding the original payload in such a way that stuff bits in it are avoided, the solution which is the subject matter of the invention will help to control all the stuff bits in a communication frame deterministically or eliminate them, and therefore make it possible to improve both the determinism of the communication times in a CAN network and its reliability, reducing the residual error probability.

Further characteristics and advantages of the invention will be described in greater detail in the following detailed description of one embodiment provided by way of a non-limiting example with reference to the appended figure which shows a communication frame according to the CAN protocol.

The remainder of this description will deal with the composing of an electronic signal intended for transmission on a communication channel according to the CAN protocol (with a standard identifier format), although this invention is not to be considered to be restricted to this communication protocol, and may be applied to any electronic signal arranged in a communication frame including an error control field calculated on the basis of a data field in which a bit stuffing technique can be applied to ensure the synchronisation of communication between a transmitting device and one or more receiving devices.

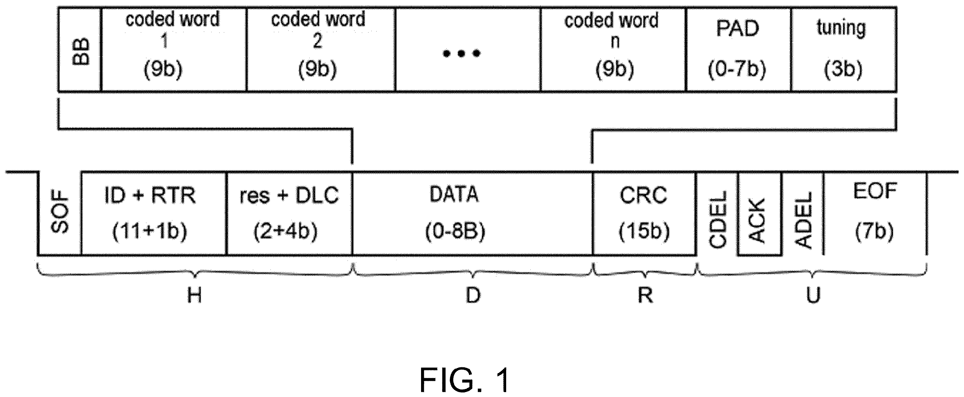

A communication frame according to the CAN protocol, shown in Figure 1, includes:

- a header field (H) which comprises a start of frame bit (SOF), a message identification field ("Identifier", ID), a remote transmission request bit (RTR), 2 reserved bits (r1, r0) and a data length code (DLC);
- a data field (D), used in other contexts to directly code the payload (P), which is available to the user and includes information defined at an application level which has to be exchanged between at least one transmitting device and a receiving device connected to a communication bus on the network;
- an error control field (R), specifically an error detection control field, CRC, calculated by means of a mathematical function applied to the preceding fields, specifically calculated as the remainder of a modulo 2 polynomial division of the string of the concatenated bits in the previous fields; and
- a trailer field (U), which includes a field delimiting the CRC code (CRC delimiter), an acknowledgement field (ACK slot), an acknowledgement delimiter field (ACK delimiter) and an end-of-frame field (EOF).

According to the conventional CAN protocol the bit stuffing technique applies only to the portion of the frame included from the start of frame bit SOF to the end of the control field CRC, while the trailer field U has a fixed format and for this reason is not relevant in the context of the invention and will not be discussed in the rest of the description.

The known techniques for reducing and eliminating the effects of bit stuffing work only on data field D, or possibly on both header field H and data field D, but do not take into consideration the fact that a spurious generation of stuff bits generally occurs also in the error control field R.

An innovative technique for eliminating stuff bits which can be applied to the error control field and more generally to the entire communication frame is presented below.

For a better understanding of the invention a mathematical notation for analysis and representation of the bit strings making up a CAN communication frame is provided below.

The nominal size in bits of a generic section Y of a communication frame is indicated by $n_Y$: for example, $n_H = 19$ (for a standard CAN header), $n_R = 15$, $n_U = 10$, while $n_D = 8 \cdot DLC$ (with $0 \leq DLC \leq 8$). Notation in bold italics instead refers to all the possible values (that is the possible bit sequences) which the different sections of a frame may have. For convenience the names of the sections are also used to indicate a specific possible value for that section. For example Y indicates all the possible values that section Y may have.

In the rest of the description a concatenation operator between sections in a communication frame (in the order in which the concatenated fields appear in the electronic signal) will further be denoted by the symbol "\". For example the notation X \ Y indicates a frame section comprising all the bits in X (in the original order) followed by all the bits in Y (in the original order). As far as the nominal size of the sections is concerned, $n_{X\backslash Y} = n_X + n_Y$.

By extension, the same operator "\" will also be used to concatenate individual bits and bit sequences.

As will be demonstrated below, under specific conditions a part of the bits in data field D may be used to prevent (or reduce) the insertion of stuff bits into error control field R, based on the ground assumption that data field D is not an empty field, that is DLC > 0.

The part of the bits in data field D used according to the invention to control the number of stuff bits in the error control field includes a tuning bit string located at the end of the data field and indicated as tuning field, T.

Consequently, the part of data field D corresponding to payload data, which may preferably be the subject of preliminary coding to eliminate stuff bits, that is the subset of data field D without tuning bit string T, is named effective data field and indicated by E, and in the currently preferred embodiment described below it is coded. This implies the relationship D = E \ T.

The number of bits in data field D which are actually available for coding the payload is therefore equal to $n_E = 8 \cdot DLC - n_T$. The header field H and the effective data field E together form the leading section of the frame, identified as L, and defined as L = H \ E.

The portion of the frame used to calculate the control code (for example a cyclic redundancy check code CRC, or a similar error detection and/or correction code) is indicated by the general term of message (M) and comprises the header field H and the data field D, and is expressed with the notation introduced as:

$$M = H \backslash D = H \backslash E \backslash T = L \backslash T$$

in which the data field D is represented by the payload bit string E concatenated with the tuning bit string T, the significance of which will be better clarified below.

The entire CAN communication frame, referred to as F, is defined by concatenation of the message M (including the header field H and the data field D) with the error control field R and the trailer field U, and is indicated as:

$$F = M \backslash R \backslash U$$

The portion of frame F which is affected by the bit stuffing mechanism is only the M \ R concatenation.

Each section of a communication frame comprising a bit string can be interpreted as a numerical polynomial in binary format. In the rest of the description therefore the same symbol will be used to indicate a section of the frame or the corresponding polynomial, that is the polynomial $Y(x)$ will correspond to section Y. The degree of the polynomial $Y(x)$ is $n_Y - 1$ while its coefficients $y_i$, with $0 \leq i \leq n_Y - 1$ correspond to the bits in section Y. The order of transmission of the bits on the bus goes from bit $y_{n_Y - 1}$ to bit $y_0$.

As a result of what has been said above, for example, the error control field R (the CRC code) can be interpreted as a bit sequence

$$R = r_{n\text{R-1}} \backslash r_{n\text{R-2}} \backslash \ldots \backslash r_1 \backslash r_0$$

while the corresponding polynomial is

$$R(x) = \sum_{i=0\ldots n\text{R-1}} r_i \cdot x^i$$

Similarly, the polynomial associated with the bit string that makes the message M is:

$$M(x) = L(x) \cdot x^{\wedge} n_T + T(x)$$

The control code R, which in CAN corresponds to a CRC, is mathematically defined as the remainder of the division performed according to the rules of modulo 2 arithmetic between $M(x) \cdot x^{\wedge} n_R$ and a generator polynomial G(x) (for example, in the case of CAN, the polynomial 0xC599):

$$M(x) \cdot x^{\wedge} n_R = Q(x) \cdot G(x) + R(x)$$

If the operator which calculates the remainder of the division according to the rules of modulo 2 arithmetic is denoted as "%", then:

$$R(x) = M(x) \cdot x^{\wedge} n_R \% G(x)$$

From a practical point of view the numerator $M(x) \cdot x^{\wedge} n_R$ is obtained by concatenating 15 bits of value "0" to the end of message M.

Finally, let $c(\cdot)$ be a function which gives the control code R corresponding to message M in a CAN communication frame using the known mechanisms for calculating the CRC, whereby:

$$R = c(M) = c(L \setminus T)$$

A system for composing an electronic signal comprising a stream of bits arranged in a communication frame includes means for signal composition according to a predetermined communication frame, for example a CAN controller in a transmission device. The said signal composing means are arranged to calculate an error control field (CRC) on the basis, *inter alia,* of a data field which includes the information which must be exchanged between the transmission device and at least one receiving device.

According to the invention, this system also comprises a programmable processing module or a configured electronic circuit associated with the said signal composing means, or integrated therewith, arranged to run a program or a processing algorithm, respectively, which may perform a coding process of at least the effective data field in such a way that the latter has no stuff bits, and a method for determining a tuning bit string adapted to ensure that calculation of the error control field brings about a bit sequence which is free of stuff bits.

The method for composing an electronic signal to which this invention relates comprises any known technique for reducing or controlling stuff bits in the data field, and preferably for eliminating stuff bits from the data field, and even more preferably includes a technique for coding the data field bit string of the 8B9B type described in G. Cena, I. Cibrario Bertolotti, T. Hu, and A. Valenzano, "Fixed-length payload encoding for low-jitter controller area network communication", published in IEEE Trans. Ind. Informat., volume 9, number 4, November 2013, hereinafter generically indicated by the acronym ZSD (Zero-Stuff bit Data).

Because calculation of the error control field (CRC) is typically performed by the signal composing means of the transmission device controller, it is impossible to apply the techniques for coding the data field, for example a technique similar to the 8B9B technique, to calculation of the error control field in order to prevent the generation of stuff bits in the error control field. Thus, prevention of the generation of stuff bits in the error control field is achieved in another way.

In theory the number of stuff bits which will be added to the CRC in the known technique depends on the header field H, the effective data field E and the tuning field T of the frame.

Let s(Y) be a function providing the precise number of stuff bits which will be added to bit sequence Y considered individually, that is separately from the contribution of the other fields which might precede sequence Y. The value given by $s(X \setminus Y)$, which provides the precise number of stuff bits added to concatenated bit sequences X and Y does not necessarily correspond to $s(X) + s(Y)$ because the end bits of sequence X may contribute to creating a primer sequence with the initial bits of sequence Y.

Let also $s_X(Y)$ be a function which provides the precise number of stuff bits added by the CAN controller to a bit sequence Y when preceded by sequence X during the step of transmitting the corresponding communication frame, calculated as

$$s_X(Y) = s(X \setminus Y) - s(X)$$

s(F) corresponds to the overall number of stuff bits added to communication frame F during the transmission step, for which the following relationship applies:

$$s(\mathrm{F}) = s(\mathrm{H}) + s_{\mathrm{H}}(\mathrm{E}) + s_{\mathrm{L}}(\mathrm{T} \setminus \mathrm{R})$$

The header H is the first field in the frame. According to the reasonable assumption that header field H does not vary between successive instances of the same message dispatched into the network by a transmission device controller, that is while the corresponding signals are being sent, the number of stuff bits added to this section, indicated by $s_{\mathrm{H}}$ ($s_{\mathrm{H}} \geq 0$), is fixed. As a consequence it can be concluded that there is no contribution to transmission jitter from header field H.

Advantageously, through careful selection of message identifiers, even if not for every possible size of payload, $s_{\mathrm{H}}$ can often be reduced to zero, which has a positive effect also on the reliability of communication.

If conveniently a technique for coding the payload with the elimination of stuff bits is adopted, such as for example a ZSD technique or more specifically the 8B9B method, then no stuff bits will be inserted into coded payload E, independently of header field H and of the original payload P, that is:

$$s_{\mathrm{H}}(\mathrm{E}) = s(\mathrm{E}) = 0$$

Finally, as already mentioned, by definition no stuff bits are added to the trailer field U.

Therefore, the overall jitter when receiving a communication frame due to the bit stuffing mechanism depends only on the stuff bits added to the fields which follow the coded effective data field E, in the specific case to the set of the tuning bit string T and the error control field R (corresponding to the CRC), that is:

$$s(\mathrm{F}) = s_{\mathrm{H}} + s_{\mathrm{L}}(\mathrm{T} \setminus \mathrm{R})$$

This relationship applies for every bit sequence L $\in$ $\boldsymbol{L^{(\mathrm{ZSD})}}$, where L is the leading section of the frame obtained by concatenating the header field H and the coded effective data field E, and $\boldsymbol{L^{(\mathrm{ZSD})}}$ is the set of all possible leading sections of the frame which may be obtained by coding payload P using a stuff bit prevention method of the Zero-Stuff bit Data type (such as for example the 8B9B method).

By way of example we consider bit sequences L $\in$ $\boldsymbol{L^{(\mathrm{ZSD2})}}$, where $\boldsymbol{L^{(\mathrm{ZSD2})}}$ is the set of all the possible leading sections of the frame obtained by coding the payload P by means of a stuff bit prevention method of the Zero-Stuff bit Data type (such as for example the 8B9B method), such as to guarantee that the number of tail bits having the same value is not more than 2.

Let $\boldsymbol{T}$ be a subset of the values which can be adopted by tuning bit string T, whose elements satisfy the following properties:

$$\boldsymbol{T} \subseteq \{01,10\} \ \text{if} \ n_{\mathrm{T}} = 2$$

$$\boldsymbol{T} \subseteq \boldsymbol{G_{n\mathrm{T},2,4,4}} \ \text{if} \ n_{\mathrm{T}} > 2$$

where $\boldsymbol{G_{n\mathrm{T},2,4,4}}$ indicates the set of all the binary strings of length $n_{\mathrm{T}}$ with no more than 2 leading bits having the same value and no more than 4 consecutive intermediate bits having the same value, and in which the first condition means that if T contains only 2 bits these cannot have the same value.

In the light of the above conditions it is possible to state that:

*Lemma 1*: if L $\in$ $\boldsymbol{L^{(\mathrm{ZSD2})}}$ and T $\in$ $\boldsymbol{T}$ then the number of stuff bits added to tuning field T and error control field R during the transmission step is equivalent to $s(\mathrm{T} \setminus \mathrm{R})$, that is:

$$s_{\mathrm{L}}(\mathrm{T} \setminus \mathrm{R}) = s(\mathrm{T} \setminus \mathrm{R})$$

This is true because by virtue of the definition of $\boldsymbol{T}$ and the properties of the ZSD$_2$ codings, and for example the 8B9B coding, no more than 4 bits having the same value can be present at the boundary between fields L and T. Thus, the generation of primer sequences at this site is automatically prevented. This means that the value $s_{\mathrm{L}}(\mathrm{T} \setminus \mathrm{R})$, that is the number of stuff bits introduced into the concatenation of the tuning and control fields during transmission of the frame, which as a rule should depend on the whole message M, and therefore also on field L, instead exclusively depends on tuning field T and error control field R, but not on the preceding portion L of the frame.

In this case the tuning bit strings $\mathbf{T} \in \boldsymbol{T}$ are defined as admissible strings.

More generally, a tuning bit string is admissible if it includes a number of consecutive leading bits of equal value in a number which is less than a predetermined first threshold quantity of leading bits, depending on the predefined threshold limit for a sequence of consecutive tail bits of identical value in the possibly coded effective data field and a number of consecutive intermediate bits of identical value in a number which is less than a predetermined second threshold quantity which depends on the predefined threshold limit for a sequence of consecutive bits of identical value in the communication frame beyond which at least one sequence break bit of opposite value or "stuff bit" is inserted (in brief, stuff bit threshold).

From the above hypothesis by way of example it follows that the number of stuff bits in the entire frame s(F), in the case where the coded payload is obtained using a $ZSD_2$ coding method, can be calculated to be:

$$s(\mathrm{F}) = s_{\mathrm{H}} + s(\mathrm{T} \setminus \mathrm{R})$$

Because control field R also depends on L, this section further influences, although indirectly, the value of s(F), that is the number of stuff bits in the whole communication frame, making it variable depending upon the payload P and as a consequence generating residual transmission jitter.

The above considerations imply that stuff bits can be completely eliminated from the frame portion following field L provided there are no primer sequences in the concatenation of T and R and the 3 initial bits of T \ R do not have the same value.

Calculation of control code R, corresponding to a specific CRC, must follow the rules imposed by the CAN standard and cannot be carried out independently of the controller programming logic. On the other hand the size and value of tuning field T can be readily controlled, for example the value of tuning field T could be calculated at run time, before the data field is provided to the CAN controller for transmission on the bus, so as to prevent primer sequences from occurring in error control field R when the CRC is calculated.

The technique which is the subject matter of this invention, which prevents the insertion of stuff bits in error control field R, depends on the existence of a value of $n_{\mathrm{T}}$ for which a function $z(\cdot)$ can be defined, which starting from leading section L determines a tuning bit sequence, i.e. a value of T, which is adapted to prevent the occurrence of stuff bits in error control field R (CRC calculated independently and automatically by the CAN controller) and also in tuning field T. This condition can be expressed as:

$$\forall \, \mathrm{L} \in \boldsymbol{L}^{\mathbf{(ZSD)}}, \, \exists \, \mathrm{T} \in \boldsymbol{T} \mid \mathrm{T} = z(\mathrm{L}) \text{ and } s_{\mathrm{L}}(\mathrm{T} \setminus \mathrm{R}) = 0$$

It will be demonstrated below that the minimum size $n_{\mathrm{T0}}$ for tuning field T which will ensure that no stuff bits are ever inserted in error control field R, and makes the method which is the subject matter of the invention possible, is equal to 3 bits in the case where $\mathbf{L} \in \boldsymbol{L}^{\mathbf{(ZSD2)}}$.

In theory, this can be simply demonstrated by considering all the possible bit combinations of header field H, coded effective data field E and tuning field T. In particular, for each size $n_{\mathrm{T}}$ of T and for each value $\mathrm{L} \in \boldsymbol{L}^{\mathbf{(ZSD)}}$ a set $\boldsymbol{T_{\mathrm{L}}}$ can be determined, defined as

$$\boldsymbol{T_{\mathrm{L}}} \triangleq \{\mathrm{T} \mid s(\mathrm{L} \setminus \mathrm{T} \setminus c(\mathrm{L} \setminus \mathrm{T})) = s_{\mathrm{H}}\}$$

which includes all the tuning strings capable of preventing the insertion of stuff bits in the sections following the header field H during the step in which the frame is being transmitted.

Each set $\boldsymbol{T_{\mathrm{L}}}$ may include zero or more elements. If there is at least one value for $n_{\mathrm{T}}$ such that for any value of $\mathrm{L} \in \boldsymbol{L}^{\mathbf{(ZSD)}}$, the set $\boldsymbol{T_{\mathrm{L}}}$ is not empty, then, in general terms, tuning field T can successfully be used to prevent the occurrence of stuff bits in error control field R. In this case the minimum value $n_{\mathrm{T0}}$ of $n_{\mathrm{T}}$ which satisfies the above condition is the optimum choice.

It can be readily demonstrated that if a particular value of $n_{\mathrm{T}}$ satisfies the condition stated, then every value $n_{\mathrm{T}}'$ which is greater than $n_{\mathrm{T}}$ will also satisfy it, the corresponding sets $\boldsymbol{L}^{\mathbf{(ZSD)}}{}'$ being proper subsets of $\boldsymbol{L}^{\mathbf{(ZSD)}}$. Vice versa, if a particular value of $n_{\mathrm{T}}$ does not satisfy the condition stated, then every smaller value will be unable to satisfy it.

From the practical point of view, the set $\boldsymbol{L}^{\mathbf{(ZSD)}}$ is too large for any exhaustive search to be carried out. In fact, although the set $\boldsymbol{L}^{\mathbf{(ZSD)}}$ is a proper (and significantly smaller) subset of $\boldsymbol{M}$, the latter includes more than $2^{11+64}$ combinations of strings for the standard identifiers, and many more for the extended ones.

Some techniques for drastically reducing the space of the states, and as a consequence the complexity of the search, will be described below.

*Partial remainders*

The following partial remainders, related to the leading section L and the tuning string T respectively, can be defined by carrying out modulo 2 divisions separately relating to calculation of the control code (CRC) for the frame sections forming a complete message M:

$$R_L(x) \triangleq [L(x) \cdot x^\wedge(n_T + n_R)] \% G(x)$$

$$R_T(x) \triangleq [T(x) \cdot x^\wedge n_R] \% G(x)$$

*Lemma 2:* the error control field R for the frame section corresponding to the complete message M, as calculated by the CAN controller of the transmitting device, can be obtained from the partial remainders related to the leading section L and the tuning string T according to the relationship:

$$R = c(L \setminus T_0) \oplus c(T)$$

where "$\oplus$" indicates the EXOR bitwise operator and $T_0$ is a sequence of $n_T$ bits having the value zero.

$R_L(x)$ and $R_T(x)$ satisfy the following properties by definition:

$$L(x) \cdot x^\wedge(n_T + n_R) = Q_L(x) \cdot G(x) + R_L(x)$$

$$T(x) \cdot x^\wedge n_R = Q_T(x) \cdot G(x) + R_T(x)$$

Summing these contributions, we obtain:

$$M(x) \cdot x^\wedge n_R = [Q_L(x) + Q_T(x)] \cdot G(x) + [R_L(x) + R_T(x)]$$

Because the degree of the polynomials $R_L(x)$ and $R_T(x)$ is certainly lower than the degree of the generator polynomial $G(x)$, the same property is also valid for their modulo 2 sum. This means that:

$$R_L(x) + R_T(x) = R(x)$$

Thus, operating on the bit sequences, it is possible to conclude that $R_L = c(L \setminus T_0)$ and $R_T = c(T)$.

The preceding lemma is therefore proven, remembering that modulo 2 arithmetic additions of polynomials correspond to the bitwise EXOR operation on corresponding bit strings.

*Mechanism of calculation for obtaining a CRC code without stuff bits*

The minimum size $n_{T0}$ of field T which ensures that no stuff bits will be inserted in tuning field T and control field R of a communication frame when $L \in L^{(ZSD2)}$, that is when the payload is coded in such a way as to guarantee that it is free from primer sequences and will end in not more than 2 bits having the same value, is 3 bits.

An exhaustive analysis of the space of the states can be performed on an appropriate subset of states which is sufficiently small to render the analysis performable in finite time, but is nevertheless representative of all possible states.

Instead of separately considering each possible value of L, only its contribution $R_L$ to control code R (CRC) needs to be taken into consideration.

All the possible values of $R_k \in \mathbf{R}$ should be considered for $R_L$, where $\mathbf{R}$ is the set of values which the error control field R can take, as calculated by the function $c(\cdot)$.

Let $L_{Rk}$ be a subset of $L^{(ZSD2)}$ defined as

$$L_{Rk} \triangleq \{L \in L^{(ZSD2)} \mid c(L \setminus T_0) = R_k\}$$

The sets $L_{Rk}$ are disjoint, that is:

$$R_x \neq R_y \implies L_{Rx} \cap L_{Ry} = \emptyset$$

and their union corresponds to the universe:

$$\bigcup_{Rk \in R} L_{Rk} = L^{(ZSD2)}$$

All possible values $T_j \in T$ which the tuning field can take are considered for each string $R_k$.

In the context of lemma 2 mentioned not far above, the following relationship is used to calculate the error control field of the frame related to the specific tuning string $T_j$

$$c(L \setminus T_j) = R_k \oplus c(T_j), \forall L \in L_{Rk}$$

In order to satisfy the assumptions of lemma 1 mentioned above, tuning strings $T_j$ are selected from a set T defined as:

$$T = \{01,10\} \text{ if } n_T = 2$$

$$T = G_{nT,2,4,4} \text{ if } n_T > 2$$

This is clearly a limiting assumption, because a CAN controller actually knows L when it transmits a communication frame. Thus, discarding in advance the other values of T which are not included in **T** is not strictly necessary. Nevertheless, this can be considered a sufficient condition to ensure the complete prevention of jitter in the communication frame.

Table I below shows values of $c(T_j)$, i.e. of the CRC code calculated on the tuning bit string for each admissible tuning string $T_j$ in the specific case when $n_T = 3$.

| j | $T_j$ | $c(T_j)_{(binary)}$ | $c(T_j)_{(hex)}$ |
|---|-------|---------------------|------------------|
| 1 | 001 | 100 0101 1001 1001 | 0x4599 |
| 2 | 010 | 100 1110 1010 1011 | 0x4eab |
| 3 | 011 | 000 1011 0011 0010 | 0x0b32 |
| 4 | 100 | 101 1000 1100 1111 | 0x58cf |
| 5 | 101 | 001 1101 0101 0110 | 0x1d56 |
| 6 | 110 | 001 0110 0110 0100 | 0x1664 |

The case $n_T = 2$ may be dealt with easily by taking into consideration the first two rows in the table.

For each pair $\{R_k, T_j\}$, the value of field R corresponding to the control code (CRC) calculated by the CAN controller in the transmitting device is calculated by the relationship

$$R_k \oplus c(T_j)$$

For the properties described above relating to the $\boldsymbol{L_{Rk}}$ sets

$$c(\mathrm{L} \setminus \mathrm{T}_j) = \mathrm{R}_k \oplus c(\mathrm{T}_j), \forall \, \mathrm{L} \in \boldsymbol{L_{Rk}}$$

The presence of stuff bits in frame F delivered to the network by the CAN controller in the transmitting device is therefore verified by calculating $s(\mathrm{L} \setminus \mathrm{T}_j \setminus \mathrm{R})$. In the meaning of lemma 1 cited above, only the concatenation of fields $\mathrm{T}_j \setminus \mathrm{R}$ is relevant for this purpose.

The space of pairs $\{\mathrm{R}_k, \mathrm{T}_j\}$ can be explored completely in order to determine whether or not the following property is valid

$$\forall \, \mathrm{R}_k \in \boldsymbol{R}, \exists \, \mathrm{T}_j \in \boldsymbol{T} \mid s(\mathrm{T}_j \setminus (\mathrm{R}_k \oplus c(\mathrm{T}_j))) = 0$$

The size of the space to be explored does not exceed $2^{\wedge}(n_T+n_R)$. When the tuning field includes strings with 3 bits, this leads to the exploration of $3 \cdot 2^{16}$ states, which can easily be processed in a short time by means of an electronic computer.

The inventors have demonstrated that if $n_T = 2$ there will be a certain number of messages in which stuff bits will still be added during the transmission stage, whatever value is selected for T. This implies that case $n_T = 1$ is also excluded by the possibilities of generating effective tuning strings.

Conversely when $n_T = 3$ there is always at least one value of T for which, regardless of the specific content of the header field H and the coded effective data field E, no stuff bits will be added to the T \ R concatenation during the transmission stage.

An extension to other ZSDi techniques in which coding of the payload P by means of a method of the Zero-Stuff bit Data type for preventing stuff bits (such as for example the 8B9B method) is such as to guarantee a number of tail bits of identical value that is not greater than i, where i is < the stuff bit threshold - 1, can be derived by analogy from the preceding considerations and is not dealt with in this description.

In more general terms the method which is the subject of the invention can also be applied when the payload is not coded. In this case it is convenient that the tuning string be "extended" in such a way as to include a break bit at the beginning, to which a value opposite to the value of the last bit in the payload P is assigned.

By virtue of the premises described above, a method for composing an electronic signal which is devoid of any stuff bits, or which has a limited and controlled number of stuff bits, which can be implemented by the means for composing a signal jointly with a processing module or an electronic circuit associated or integrated therewith, comprises the following steps:

calculating a first partial error control field as a function of a header field and an effective data field which may be coded;
calculating a second partial error control field as a function of a tuning string, for each admissible tuning string;
calculating a total error control field starting from the first and second partial error control fields, for each second partial error control field calculated;
in the concatenation of the header field, the effective data field, which might be coded, and the tuning string with the corresponding error control field, checking whether or not a plurality of consecutive bits having identical values in number equal to a predetermined threshold limit for which it is necessary to insert at least one sequence break bit having an opposite value (stuff bit), or stuff bit threshold, is present in the concatenation of the tuning bit string and the error control field,
determining at least one valid tuning string among the said admissible tuning strings if the concatenation of the header field, the effective data field, which might be coded, and the said tuning string with the respective error control field does not require a sequence break bit (stuff bit) to be inserted, neither into the tuning bit string nor in the error control field, and
assemblying the communication frame by concatenating the header field, the effective data field, which might be coded, and a valid tuning string determined in the previous step.

In the preferred embodiment described by way of example for a CAN communication, in which the payload is coded in such a way as to be free from stuff bits, the method for composing the whole electronic signal comprises the following steps:

- coding the payload P of a communication frame according to a coding technique, for example a $ZSD_2$ coding technique in order to generate a coded payload field E which is free from stuff bits, preferably using an 8B9B coding technique;

- composing a leading section of frame L comprising the concatenation of a header field H and the coded effective data field E;
- calculating a first partial error control field $R_L$ related to the leading section of frame L as a function of a header field H and the coded effective data field E, by a CRC code calculation module of the said signal composing means or by the said processing module associated or incorporated with the signal composing means;
- determining a string of tuning bits $T_j$ adapted to prevent the generation of stuff bits in the error control field R of the frame, by a selection module for the tuning field of the said processing module associated or integrated with the signal composing means, through selection between a plurality of admissible candidate values;
- calculating a second partial error control field $R_{Tj}$ related to the tuning bit string $T_j$ by a calculation module for the CRC code of the said signal composing means or the said processing module associated or integrated with the signal composing means, for each admissible tuning string selected during the preceding step;
- calculating a total error control field $R_j$ from the first partial error control field $R_L$ and a second partial error control field $R_{Tj}$, for each possible second partial error control field corresponding to an admissible tuning string $T_j$;
- concatenating a tuning string $T_j$ with the respective error control field $R_j$, for each admissible tuning string, and checking wheter or not a plurality of consecutive bits of identical value in number equal to the said predetermined threshold limit (5 bits in the case of CAN) for which it is necessary to insert at least one sequence break bit having an opposite value or stuff bit is present in the aforesaid concatenated section, or - in similar terms - checking if stuff bits are generated in the aforesaid concatenated section;
- determining at least one valid tuning string T among the said admissible tuning strings if concatenation of the said tuning string with the respective error control field does not require the insertion of a sequence break bit or stuff bit; and
- assemblying the communication frame by concatenation of the header field H, the coded effective data field E and one of the valid tuning strings T determined in the previous step.

The mechanism for selecting a tuning string from a plurality of valid tuning strings depends on the ultimate aim of the mechanism, which may for example be reducing communication jitter, reducing the probability of residual error in the communication channel, or minimising the processing times of the processing module or the electronic circuit.

The sequence of bits corresponding to the frame of message M determined in this way will be effectively transmitted on the bus by the CAN controller of the transmitting device. Details related to the manner in which the header field H and the data field D obtained as a concatenation of the coded effective data field E and the tuning string T will be provided to the CAN controller in the transmitting device are wholly irrelevant for the purposes of this invention.

Advantageously, since:

a) the number of stuff bits in the header field H is fixed and known; and

b) a ZSD coding technique for the data field, such as for example the 8B9B coding technique, completely prevents stuff bits from being generated in the coded effective data field E,

the method for composing signals described above completely prevents stuff bits from being generated also in the concatenation of the tuning field T and control field R.

The complete communication frame assembled in this way has a number of stuff bits which can be known in advance and which is completely independent of the contents of the payload P, and the transmission of an electronic signal according to this frame will take place without the occurrence of any random communication jitter influencing the time of end of reception by the receiving device.

Advantageously, the solution which is the subject matter of the invention is not only capable of being implemented in practice, but its adoption in a communication network operating using the CAN protocol, and particularly in a controller of a CAN transmitter, will not have an adverse influence on the performance of communication according to that protocol, neither will it require any particular memory capacity in the system for carrying out the calculations envisaged.

In receiving devices, decoding carried out in accordance with the mechanisms envisaged by the specific ZSD coding scheme adopted, in the case in point a 8B9B decoder, a description of which is available in the literature, may be used. The only modification required comprises removal of the tuning string from the frames received by the CAN controller in the receiving devices before actual ZSD decoding is performed.

Conveniently, based on experimental tests carried out on large sets of data, the inventors have verified that the residual communication jitter measured by the receiving side, in theory equal to 0 in the case of implementations obtained by modifying electronic circuits relating to signal composing means, also in the case of implementations based on suitable code (codec) executed on a processing module may be advantageously reduced by approximately two orders of magnitude in comparison with the typical jitter which occurs in a CAN communication frame when it is transmitted without resorting to any method for the prevention of bit stuffing.

For example, such jitter changes from 20 bit intervals to less than one bit interval, and the residual jitter is wholly due to the variability in the data processing time in the codec of the devices involved in communication, and in random interface delays between the processing module associated and integrated with the signal composing means and the signal composing means of a CAN controller themselves.

This means that in practice timing accuracy of less than one microsecond can easily be achieved in the communication of signals on a CAN network. Consequently, actions such as activation and sampling on remote devices connected to a CAN network can be carried out with such precise timing, including satisfying the stringent requirements of motion control applications, as well as on measuring instruments and distributed control systems with precise timing constraints between the connected devices.

It will be noted that the embodiment of this invention proposed in the preceding description is of a purely exemplary nature and does not limit this invention. A person skilled in the art could easily implement this invention in different embodiments, including specific electronic circuits which have to be incorporated in CAN controllers, which do not diverge from the principles described here, and which are therefore included in this patent.

This also applies as regards the possibility of applying this invention to other communication channels or systems using communication protocols other than the CAN protocol in which the threshold limit of an unchanged sequence of bits is other than 5, for example 7 bits as in the case of the USB protocol for shorter connections or in the case of systems having more accurate clock systems, or which use different mechanisms to calculate the control code, provided that the laws of linearity apply, or, as an alternative, of the possibility of incremental computation typical of CRC.

Of course, without affecting the principle of the invention, embodiments and details of implementation may be varied widely in relation to what has been described and illustrated purely by way of a non-limiting example without thereby departing from the scope of protection of the invention as defined by the appended claims.

### Claims

**1.** Method for composing an electronic signal comprising a stream of bits arranged in a communication frame including a header field, a data field and an error control field,
in which a sequence of consecutive bits of the same value in a number equal to a predetermined stuff bit threshold limit causes at least one sequence break bit of the opposite value, stuff bit, to be inserted, and
in which the error control field is calculated as a predetermined function at least of the current value of said data field,
**characterised in that** the method comprises partitioning the data field into an effective data field, including a sequence of payload bits, and a tuning field, including a tuning bit string of predetermined length, and
selecting a tuning bit string from a predetermined set of tuning bit strings in such a way that concatenation of the selected tuning bit string and the error control field calculated as a function of at least said effective data field and said selected tuning bit string does not include a series of consecutive bits of the same value equal in number to said predetermined stuff bit threshold limit,
wherein said set of tuning bit strings includes all the combinations of admissible tuning bit strings of equal length, a tuning bit string being admissible if it includes a number of consecutive leading bits of the same value that is lower than a predetermined first threshold quantity of leading bits dependent on a predefined tail bit threshold limit for a sequence of consecutive tail bits having the same value in the effective data field and a number of consecutive intermediate bits of the same value that is lower than a predetermined second threshold quantity of intermediate bits, dependent on the predetermined stuff bit threshold limit, wherein selecting a tuning bit string includes:

calculating a first partial error control field as a function of the header field and the effective data field;
calculating a second partial error control field as a function of a tuning bit string for each tuning bit string of the predetermined set of tuning bit strings;
calculating a total error control field from the first and second partial error control field for each calculated second partial error control field;
in the concatenation of the header field, the effective data field and the tuning bit string with the corresponding error control field, checking whether a plurality of consecutive bits of the same value are present in the concatenation of the tuning bit string and the error control field in a number equal to the predetermined stuff bit threshold limit whereby it is necessary to insert at least one sequence break bit of opposite value, stuff bit;
determining at least one valid tuning bit string among said predetermined set of tuning bit strings if the concatenation of the header field, the effective data field and said tuning bit string with the corresponding error control field does not require a sequence break bit, stuff bit, to be inserted, neither into the tuning bit string nor into the error control field; and
assembling the communication frame by concatenating the header field, the effective data field and a valid tuning bit string determined in the previous step.

**2.** Method according to claim 1, comprising selecting a tuning bit string from a predetermined set of tuning bit strings, wherein, if the effective data field is a coded effective data field which does not include sequences of consecutive bits of equal value equal in number to said predetermined stuff bit threshold limit and does not include a number of tail bits of equal value greater than the predefined tail bit threshold limit for the effective data field, at least one valid tuning bit string among the admissible tuning bit strings is determined when concatenation of the said tuning bit string with the corresponding error control field does not require at least one sequence break bit, stuff bit, to be inserted, the concatenation of the coded effective data field and a valid tuning bit string determining the overall data field for the said communication frame.

**3.** Method according to claim 2, in which the said predetermined stuff bit threshold limit is equal to 5 bits.

**4.** Method according to claim 3, in which the said predefined tail bit threshold limit for the effective data field for a sequence of consecutive tail bits of the same value in the effective data field is equal to 2 bits.

**5.** Method according to claim 4, in which said error control field includes an error detection code.

**6.** Method according to claim 5, in which said error control field includes a cyclic redundancy check code.

**7.** Method according to claim 6, in which said error control field is calculated as the remainder of a modulo 2 polynomial division of all the preceding bits in the frame, with polynomial 0xC599.

**8.** Method according to claim 7, in which said tuning bit string includes three bits.

**9.** Method according to claim 8, in which said tuning bit string includes one of the combinations [001], [010], [011], [100], [101], [110].

**10.** Processing system for composing an electronic signal comprising a stream of bits arranged in a communication frame, programmed to perform a method according to any one of claims 1 to 9.

**11.** Configured electronic circuit for performing a method for composing an electronic signal comprising a stream of bits arranged in a communication frame according to any one of claims 1 to 9.

**12.** Computer program executable by a programmable processing module, comprising one or more code modules for performing a method for composing an electronic signal comprising a stream of bits arranged in a communication frame according to any one of claims 1 to 9, when said computer program is executed by the programmable processing module.

**13.** Electronic signal transmitted from an emitter module to at least one receiver module, the electronic signal comprising a bit stream arranged in a communication frame including a header field, a data field and an error control field, wherein a sequence of consecutive data bits of the same value equal in number to a predetermined stuff bit threshold limit causes at least one sequence break bit of the opposite value stuff bit, to be inserted, and wherein the error control field is calculated as a predetermined function at least of the current value of the said data field, **characterised in that** the data field is partitioned into an effective data field, including a sequence of effective data bits, including a sequence of payload bits, and a tuning field including a tuning bit string of a predetermined length, and wherein said tuning bit string is selected from a predeterminded set of admissible tuning bit strings in such a way that concatenation of the selected tuning bit string and the error control field calculated as a function of at least said effective data field and said selected tuning bit string does not include a series of consecutive bits of the same value equal in number to the said predetermined stuff bit threshold limit, wherein said set of tuning bit strings includes all combinations of admissible tuning bit strings of equal length, a tuning bit string being admissible if it includes a number of consecutive leading bits of the same value that is lower than a predetermined first threshold quantity of leading bits, dependent on a predefined tail bit threshold limit for a sequence of consecutive tail bits of same value in the effective data field and a number of consecutive intermediate bits of same value that is lower than a predetermined second threshold quantity of intermediate bits, dependent on the predetermined stuff bit threshold limit.

**Patentansprüche**

1. Verfahren zum Zusammensetzen eines elektronischen Signals mit einem in einem Kommunikationsrahmen angeordneten Bitstrom, welcher Kommunikationsrahmen ein Headerfeld, ein Datenfeld und ein Fehlersteuerfeld enthält, wobei eine Sequenz von aufeinander folgenden Bits mit dem gleichen Wert in einer Anzahl gleich einem vorbestimmten Stopfbitgrenzwert bewirkt, dass wenigstens ein Sequenzunterbrechungsbit mit dem entgegengesetzten Wert (Stopfbit) eingefügt wird, und
wobei das Fehlersteuerfeld als vorbestimmte Funktion wenigstens des aktuellen Wertes des Datenfeldes berechnet wird,
**dadurch gekennzeichnet, dass** das Verfahren Folgendes umfasst: Unterteilen des Datenfeldes in ein effektives Datenfeld, das eine Sequenz von Nutzdatenbits enthält, und ein Abstimmfeld, das eine Abstimmbitfolge von vorbestimmter Länge enthält, und
Auswählen einer Abstimmbitfolge aus einem vorbestimmten Satz von Abstimmbitfolgen auf eine solche Weise, dass eine Verkettung der ausgewählten Abstimmbitfolge und des Fehlersteuerfelds, welches als eine Funktion wenigstens des effektiven Datenfeldes und der ausgewählten Abstimmbitfolge berechnet wird, nicht eine Reihe von aufeinander folgenden Bits mit dem gleichen Wert, dessen Anzahl dem vorgegebenen Stopfbitgrenzwert entspricht, enthält,
wobei der Satz von Abstimmbitfolgen alle Kombinationen zulässiger Abstimmbitfolgen von gleicher Länge enthält, wobei eine Abstimmbitfolge zulässig ist, wenn sie eine Anzahl von aufeinander folgenden führenden Bits enthält mit dem gleichen Wert, der niedriger ist als eine vorbestimmte erste Grenzwertmenge von führenden Bits abhängig von einem vorbestimmten Endbitgrenzwert für eine Folge von aufeinander folgenden Endbits mit dem gleichen Wert in dem effektiven Datenfeld und eine Anzahl von aufeinander folgenden Zwischenbits mit dem gleichen Wert, der niedriger ist als eine vorbestimmte Grenzwertmege der Zwischenbits, abhängig von dem vorbestimmten Stopfbitgrenzwert,
wobei das Auswählen einer Abstimmbitfolge Folgendes umfasst:

Berechnen eines ersten Teil-Fehlersteuerfeldes als eine Funktion des Headerfelds und des effektiven Datenfelds;
Berechnen eines zweiten Teil-Fehlersteuerfeldes entsprechend einer Abstimmbitfolge für jede Abstimmbitfolge des vorbestimmten Satzes von Abstimmbitfolgen;
Berechnen eines Gesamt-Fehlersteuerfeldes aus dem ersten und dem zweiten Teil-Fehlersteuerfeld für jedes berechnete zweite Teil-Fehlersteuerfeld;
bei der Verkettung des Headerfeldes, des effektiven Datenfeldes und der Abstimmbitfolge mit dem entsprechenden Fehlersteuerfeld, Überprüfen, ob eine Vielzahl aufeinander folgender Bits mit dem gleichen Wert in der Verkettung der Abstimmbitfolge und des Fehlersteuerfeldes vorliegen in einer Anzahl, die dem vorbestimmten Stopfbitgrenzwert entspricht, wodurch es erforderlich ist, wenigstens ein Sequenzunterbrechungsbit mit entgegengesetztem Wert (Stopfbit) einzufügen;
Bestimmen wenigstens einer gültigen Abstimmbitfolge unter dem vorbestimmten Satz von Abstimmbitfolgen, wenn die Verkettung des Headerfeldes, des effektiven Datenfeldes und der Abstimmbitfolge mit dem entsprechenden Fehlersteuerfeld nicht erfordert, dass ein Sequenzunterbrechungsbit (Stopfbit) weder in die Abstimmbitfolge, noch in das Fehlersteuerfeld, eingefügt wird; und
Zusammensetzen des Kommunikationsrahmens durch Verkettung des Headerfeldes, des effektiven Datenfeldes und einer gültigen Abstimmbitfolge, die in dem vorangegangenen Schritt bestimmt wurde.

2. Verfahren nach Anspruch 1, umfassend das Auswählen einer Abstimmbitfolge aus einem vorbestimmten Satz von Abstimmbitfolgen,
wobei, wenn es sich bei dem effektiven Datenfeld um ein codiertes effektives Datenfeld handelt, das keine Sequenzen von aufeinander folgenden Bits mit gleichem Wert, dessen Anzahl dem vorgegebenen Stopfbitgrenzwert entspricht, enthält, und das keine Anzahl von Endbits mit gleichem Wert, der größer als der vordefinierte Endbitgrenzwert für das effektive Datenfeld ist, enthält, wenigstens eine gültige Abstimmbitfolge unter den zulässigen Abstimmbitfolgen bestimmt wird, wenn die Verkettung der Abstimmbitfolge mit dem entsprechenden Fehlersteuerfeld nicht erfordert, dass wenigstens ein Sequenzunterbrechungsbit (Stopfbit) eingefügt wird,
wobei die Verkettung des codierten effektiven Datenfeldes und einer gültigen Abstimmbitfolge das gesamte Datenfeld für den Kommunikationsrahmen bestimmt.

3. Verfahren nach Anspruch 2, wobei der vorbestimmte Stopfbitgrenzwert 5 Bits entspricht.

4. Verfahren nach Anspruch 3, wobei der vordefinierte Endbitgrenzwert für das effektive Datenfeld für eine Sequenz von aufeinander folgenden Endbits mit dem gleichen Wert in dem effektiven Datenfeld 2 Bits entspricht.

5. Verfahren nach Anspruch 4, wobei das Fehlersteuerfeld einen Fehlererfassungscode enthält.

6. Verfahren nach Anspruch 5, wobei das Fehlersteuerfeld einen Code zur zyklischen Redundanzprüfung enthält.

7. Verfahren nach Anspruch 6, wobei das Fehlersteuerfeld als Rest einer Modulo-2-Polynomdivision aller vorhergehenden Bits in dem Rahmen mit dem Polynom 0xC599 berechnet wird.

8. Verfahren nach Anspruch 7, wobei die Abstimmbitfolge drei Bits enthält.

9. Verfahren nach Anspruch 8, wobei die Abstimmbitfolge eine der folgenden Kombinationen enthält: [001], [010], [011], [100], [101], [110].

10. Verarbeitungssystem zum Zusammensetzen eines elektronischen Signals mit einem in einem Kommunikationsrahmen angeordneten Bitstrom, welches System dazu programmiert ist, ein Verfahren nach einem der Ansprüche 1 bis 9 durchzuführen.

11. Konfigurierte elektronische Schaltung zum Durchführen eines Verfahrens zum Zusammensetzen eines elektronischen Signals mit einem in einem Kommunikationsrahmen angeordneten Bitstrom nach einem der Ansprüche 1 bis 9.

12. Computerprogramm, das durch ein programmierbares Verarbeitungsmodul ausführbar ist, welches ein oder mehrere Codemodule zum Ausführen eines Verfahrens zum Zusammensetzen eines elektronischen Signals mit einem in einem Kommunikationsrahmen angeordneten Bitstrom nach einem der Ansprüche 1 bis 9, wenn das Computerprogramm durch das programmierbare Verarbeitungsmodul ausgeführt wird.

13. Elektronisches Signal, das von einem Sendermodul an wenigstens ein Empfängermodul gesendet wird, wobei das elektronische Signal einen in einem Kommunikationsrahmen angeordneten Bitstrom umfasst, welcher Kommunikationsrahmen ein Headerfeld, ein Datenfeld und ein Fehlersteuerfeld enthält,
wobei eine Sequenz von aufeinander folgenden Bits mit dem gleichen Wert in einer Anzahl gleich einem vorbestimmten Stopfbitgrenzwert bewirkt, dass wenigstens ein Sequenzunterbrechungsbit mit dem entgegengesetzten Wert (Stopfbit) eingefügt wird, und
wobei das Fehlerüberwachungsfeld als vorbestimmte Funktion wenigstens des aktuellen Wertes des Datenfeldes berechnet wird,
**dadurch gekennzeichnet, dass** das Datenfeld unterteilt wird in ein effektives Datenfeld, das eine Sequenz von effektiven Datenbits enthält, die eine Sequenz von Nutzdatenbits enthalten, und ein Abstimmfeld, das eine Abstimmbitfolge von vorbestimmter Länge enthält, und
wobei die Abstimmbitfolge aus einem vorbestimmten Satz von Abstimmbitfolgen auf eine solche Weise ausgewählt wird, dass eine Verkettung der ausgewählten Abstimmbitfolge und des Fehlersteuerfelds, welches als eine Funktion wenigstens des effektiven Datenfeldes und der ausgewählten Abstimmbitfolge berechnet wird, nicht eine Reihe von aufeinander folgenden Bits mit dem gleichen Wert, dessen Anzahl dem vorgegebenen Stopfbitgrenzwert entspricht, enthält,
wobei der Satz von Abstimmbitfolgen alle Kombinationen zulässiger Abstimmbitfolgen von gleicher Länge enthält, wobei eine Abstimmbitfolge zulässig ist, wenn sie eine Anzahl von aufeinander folgenden führenden Bits enthält mit dem gleichen Wert, der niedriger ist als eine vorbestimmte erste Grenzwertmenge von führenden Bits abhängig von einer vorbestimmten Endbitgrenzwert für eine Sequenz von aufeinander folgenden Endbits mit dem gleichen Wert in dem effektiven Datenfeld und eine Anzahl von aufeinander folgenden Zwischenbits mit dem gleichen Wert, der niedriger ist als eine vorbestimmte Grenzwertmege der Zwischenbits, abhängig von dem vorbestimmten Stopfbitgrenzwert.

**Revendications**

1. Procédé pour composer un signal électronique comprenant un train de bits agencé dans une trame de communication incluant un champ d'en-tête, un champ de données et un champ de contrôle d'erreur,
dans lequel une séquence de bits consécutifs de la même valeur en un nombre égal à une limite de seuil de bits de bourrage prédéterminée entraîne l'insertion d'au moins un bit d'interruption de séquence de la valeur opposée, bit de bourrage, et

dans lequel le champ de contrôle d'erreur est calculé comme une fonction prédéterminée au moins de la valeur actuelle dudit champ de données,

**caractérisé en ce que** le procédé comprend la division du champ de données en un champ de données effectives, incluant une séquence de bits de charge utile, et un champ de réglage incluant une chaîne de bits de réglage de longueur prédéterminée, et

la sélection d'une chaîne de bits de réglage à partir d'un ensemble prédéterminé de chaînes de bits de réglage de telle manière qu'une concaténation de la chaîne de bits de réglage sélectionnée et du champ de contrôle d'erreur calculé en fonction d'au moins ledit champ de données effectives et ladite chaîne de bits de réglage sélectionnée n'inclue pas une série de bits consécutifs de la même valeur en nombre égal à ladite limite de seuil de bits de bourrage prédéterminée,

dans lequel ledit ensemble de chaînes de bits de réglage inclut toutes les combinaisons de chaînes de bits de réglage admissibles de longueur égale, une chaîne de bits de réglage étant admissible si elle inclut un nombre de bits de tête consécutifs de la même valeur qui est inférieur à une première quantité de seuil prédéterminée de bits de tête dépendant d'une limite de seuil de bits de queue prédéfinie pour une séquence de bits de queue consécutifs ayant la même valeur dans le champ de données effectives et un nombre de bits intermédiaires consécutifs de la même valeur qui est inférieur à une deuxième quantité de seuil prédéterminée de bits intermédiaires, dépendante de la limite de seuil de bits de bourrage prédéterminée,

dans lequel la sélection d'une chaîne de bits de réglage inclut :

le calcul d'un premier champ de contrôle d'erreur partiel en fonction du champ d'en-tête et du champ de données effectives ;

le calcul d'un deuxième champ de contrôle d'erreur partiel en fonction d'une chaîne de bits de réglage pour chaque chaîne de bits de réglage de l'ensemble prédéterminé de chaînes de bits de réglage ;

le calcul d'un champ de contrôle d'erreur total à partir du premier et du deuxième champ de contrôle d'erreur partiel pour chaque deuxième champ de contrôle d'erreur partiel calculé ;

dans la concaténation du champ d'en-tête, du champ de données effectives et de la chaîne de bits de réglage avec le champ de contrôle d'erreur correspondant, le fait de vérifier si une pluralité de bits consécutifs de la même valeur est présente dans la concaténation de la chaîne de bits de réglage et du champ de contrôle d'erreur en un nombre égal à la limite de seuil de bits de bourrage prédéterminée, moyennant quoi il est nécessaire d'insérer au moins un bit d'interruption de séquence de valeur opposée, bit de bourrage ;

la détermination d'au moins une chaîne de bits de réglage valide parmi ledit ensemble prédéterminé de chaînes de bits de réglage si la concaténation du champ d'en-tête, du champ de données effectives et de ladite chaîne de bits de réglage avec le champ de contrôle d'erreur correspondant ne nécessite pas l'insertion d'un bit de d'interruption de séquence, bit de bourrage, ni dans la chaîne de bits de réglage ni dans le champ de contrôle d'erreur ; et

l'assemblage de la trame de communication en concaténant le champ d'en-tête, le champ de données effectives et une chaîne de bits de réglage valide déterminée dans l'étape précédente.

**2.** Procédé selon la revendication 1, comprenant la sélection d'une chaîne de bits de réglage à partir d'un ensemble prédéterminé de chaînes de bits de réglage,

dans lequel, si le champ de données effectives est un champ de données effectives codé qui n'inclut pas des séquences de bits consécutifs de valeur égale, égale en nombre à ladite limite de seuil de bits de bourrage prédéterminée et n'inclut pas un nombre de bits de queue de valeur égale supérieure à la limite de seuil de bits de queue prédéfinie pour le champ de données effectives, au moins une chaîne de bits de réglage valide parmi les chaînes de bits de réglage admissibles est déterminée quand une concaténation de ladite chaîne de bits de réglage avec le champ de contrôle d'erreur correspondant ne nécessite pas l'insertion d'au moins un bit de d'interruption de séquence, bit de bourrage,

la concaténation du champ de données effectives codé et d'une chaîne de bits de réglage valide déterminant le champ de données global pour ladite trame de communication.

**3.** Procédé selon la revendication 2, dans lequel ladite limite de seuil de bits de bourrage prédéterminée est égale à 5 bits.

**4.** Procédé selon la revendication 3, dans lequel ladite limite de seuil de bits de queue prédéfinie pour le champ de données effectives pour une séquence de bits de queue consécutifs de la même valeur dans le champ de données effectives est égale à 2 bits.

**5.** Procédé selon la revendication 4, dans lequel ledit champ de contrôle d'erreur inclut un code de détection d'erreur.

**6.** Procédé selon la revendication 5, dans lequel ledit champ de contrôle d'erreur inclut un code de contrôle de redondance cyclique.

**7.** Procédé selon la revendication 6, dans lequel ledit champ de contrôle d'erreur est calculé comme le reste d'une division polynomiale modulo 2 de tous les bits précédents dans la trame, avec polynôme 0xC599.

**8.** Procédé selon la revendication 7, dans lequel ladite chaîne de bits de réglage comprend trois bits.

**9.** Procédé selon la revendication 8, dans lequel ladite chaîne de bits de réglage inclut une des combinaisons [001], [010], [011], [100], [101], [110].

**10.** Système de traitement pour composer un signal électronique comprenant un train de bits agencé dans une trame de communication, programmé pour réaliser un procédé selon l'une quelconque des revendications 1 à 9.

**11.** Circuit électronique configuré pour réaliser un procédé pour composer un signal électronique comprenant un train de bits agencé dans une trame de communication selon l'une quelconque des revendications 1 à 9.

**12.** Programme informatique exécutable par un module de traitement programmable, comprenant un ou plusieurs modules de code pour réaliser un procédé pour composer un signal électronique comprenant un train de bits agencé dans une trame de communication selon l'une quelconque des revendications 1 à 9, quand ledit programme informatique est exécuté par le module de traitement programmable.

**13.** Signal électronique transmis d'un module émetteur à au moins un module récepteur, le signal électronique comprenant un train de bits agencé dans une trame de communication incluant un champ d'en-tête, un champ de données et un champ de contrôle d'erreur,
dans lequel une séquence de bits de données consécutifs de la même valeur en un nombre égal à une limite de seuil de bits de bourrage prédéterminée entraîne l'insertion d'au moins un bit de d'interruption de séquence de la valeur opposée, bit de bourrage, et
dans lequel le champ de contrôle d'erreur est calculé comme une fonction prédéterminée au moins de la valeur actuelle dudit champ de données,
**caractérisé en ce que** le champ de données est divisé en un champ de données effectives, incluant une séquence de bits de données effectives, incluant une séquence de bits de données effectives, et un champ de réglage incluant une chaîne de bits de réglage d'une longueur prédéterminée, et
dans lequel ladite chaîne de bits de réglage est sélectionnée à partir d'un ensemble prédéterminé de chaînes de bits de réglage admissibles de telle manière qu'une concaténation de la chaîne de bits de réglage sélectionnée et du champ de contrôle d'erreur calculé en fonction d'au moins ledit champ de données effectives et ladite chaîne de bits de réglage sélectionnée n'inclue pas une série de bits consécutifs de la même valeur en nombre égal à ladite limite de seuil de bits de bourrage prédéterminée,
dans lequel ledit ensemble de chaînes de bits de réglage inclut toutes les combinaisons de chaînes de bits de réglage admissibles de longueur égale, une chaîne de bits de réglage étant admissible si elle inclut un nombre de bits de tête consécutifs de la même valeur qui est inférieur à une première quantité de seuil prédéterminée de bits de tête dépendant d'une limite de seuil de bits de queue prédéfinie pour une séquence de bits de queue de queue consécutifs de même valeur dans le champ de données effectives et un nombre de bits intermédiaires consécutifs de même valeur qui est inférieur à une deuxième quantité de seuil prédéterminée de bits intermédiaires, dépendante de la limite de seuil de bits de bourrage prédéterminée.

EP 2 908 475 B1

| BB | coded word 1 (9b) | coded word 2 (9b) | ... | coded word n (9b) | PAD (0-7b) | tuning (3b) |

| SOF | ID + RTR (11+1b) | res + DLC (2+4b) | DATA (0-8B) | CRC (15b) | CDEL | ACK | ADEL | EOF (7b) |

H      D      R      U

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013020781 A

### Non-patent literature cited in the description

- **T. NOLTE ; H. HANSSON ; C. NORSTRÖM ; S. PUNNEKKAT.** Using bit-stuffing distributions in CAN analysis. *Proc. IEEE/IEE Real-Time Embedded Systems Workshop,* 2001
- Minimising CAN response-time jitter by message manipulation. *Proc. VIII IEEE Real-time and Embedded Technology and Application Symposium,* 2002
- *CAN with Flexible Data-Rate specification,* April 2012
- **G. CENA ; I. CIBRARIO BERTOLOTTI ; T. HU ; A. VALENZANO.** Fixed-length payload encoding for low-jitter Controller Area Network communication. *IEEE Trans. Ind. Informat.,* November 2013, vol. 9 (4
- **G. CENA ; I. CIBRARIO BERTOLOTTI ; T. HU ; A. VALENZANO.** Performance comparison of mechanisms to reduce bit stuffing jitters in Controller Area Networks. *Proc. 17th IEEE Conference on Emerging Technologies and Factory Automation (ETFA),* 2012, 1-8
- **G. CENA ; I. CIBRARIO BERTOLOTTI ; T. HU ; A. VALENZANO.** Fixed-length payload encoding for low-jitter controller area network communication. *IEEE Trans. Ind. Informat.,* November 2013, vol. 9 (4